Europäisches Patentamt

European Patent Office

Office européen des brevets

(19)

(11) Veröffentlichungsnummer: **0 271 051**
**A2**

# (12) EUROPÄISCHE PATENTANMELDUNG

(21) Anmeldenummer: **87118096.4**

(22) Anmeldetag: **08.12.87**

(51) Int. Cl.⁴: **B29C 37/00 , B29C 45/00**

(30) Priorität: **10.12.86 DE 3642138**

(43) Veröffentlichungstag der Anmeldung:
**15.06.88 Patentblatt 88/24**

(84) Benannte Vertragsstaaten:
**DE ES FR GB IT NL SE**

(71) Anmelder: **Röhm GmbH**
**Kirschenallee Postfach 4242**
**D-6100 Darmstadt 1(DE)**

(72) Erfinder: **Vetter, Heinz, Dr.-Ing.**
**Taunusstrasse 92**
**D-6101 Rossdorf 1(DE)**
Erfinder: **Höss, Werner, Dipl.-Ing.**
**Kirschberg 18**
**D-6103 Griesheim(DE)**
Erfinder: **Siol, Werner, Dr.**
**Goerdelerweg 34**
**D-6100 Darmstadt-Eberstadt(DE)**

(54) **Verfahren zur Herstellung kratzfest beschichteter Kunststofformkörper.**

(57) Spritzgußformteile mit kratzfester Oberfläche werden erzeugt, indem auf die formbildende Oberfläche eines Spritzgußwerkzeugs zur Bildung einer kratzfesten Beschichtung eine flüssige Mischung aus wenigstens einem radikalisch polymerisierbaren Monomeren mit mehr als einer polymerisierbaren Doppelbindung und wenigstens einem radikalbildenden Initiator aufgebracht und wenigstens teilweise polymerisiert wird und anschließend eine thermoplastische oder duroplastische Formmasse in das geschlossene Spritzgußwerkzeug eingespritzt wird.

EP 0 271 051 A2

## Gebiet der Erfindung

Die Erfindung betrifft ein Verfahren zur Herstellung kratzfest beschichteter Kunststofformkörper nach dem Spritzgußverfahren.

Stand der Technik

Es ist bekannt, nach dem Spritzgußverfahren hergestellte Formkörper aus Kunststoff nachträglich kratzfest zu beschichten, indem man sie in eine Lösung eines zur Bildung einer kratzfesten Schicht geeigneten Materials eintaucht, das Lösemittel verflüchtigt und die Schicht aushärtet. Bei dem zweiten in der DE-C 24 55 715 beschriebenen Verfahren wird dazu eine Lösung verwendet, die eine radikalisch polymerisierbare Verbindung mit wenigstens drei Acryl-oder Methacrylgruppen und einen radikalbildenden Initiator enthält. Durch die nachträgliche Beschichtung wird die Maßgenauigkeit des Formteils verändert. Weiterhin kann durch das in der Beschichtungslösung enthaltene Lösemittel Rißbildung in dem Kunststoffteil verursacht werden.

Gemäß DE-A 20 58 504 wird eine Glasplatte mit einem flüssigen, zu einem kratzfesten Beschichtungskunststoff härtbaren Gemisch beschichtet, eine Platte aus Kunststoff unter Vermeidung des Einschlusses von Luftblasen aufgelegt, die noch freie Oberfläche der Kunststoffplatte mit dem flüssigen Gemisch beschichtet, eine zweite Glasplatte aufgelegt, die Schichten des Gemisches gehärtet und die Glasplatten abgelöst. Dieses Verfahren gestattet zwar die Herstellung maßgenauer Kunststoffplatten mit kratzfester Oberfläche, eignet sich aber nicht zur Herstellung beliebig geformter Formkörper, wie Spritzgußteilen.

Zur Herstellung beschichteter Spritzgußteile wird in der EP-A 123 374 vorgeschlagen, nach der Erzeugung eines Spritzgußteil das Formwerkzeug leicht zu öffnen, eine flüssige Masse zur Bildung einer Oberflächenschicht einzuspritzen und das Werkzeug wieder zu schließen. Die Masse wird durch Drehbewegungen der Formhälften während des Schließvorganges auf der Oberfläche des Formteils verteilt und härtet danach aus. Abgesehen davon, daß viele Spritzgußformen Drehbewegungen zur Verteilung der nachgespritzten Masse nicht gestatten würden, wird der Aufbau des Formwerkzeugs durch die Anbringung der Drehvorrichtung aufwendig und teuer.

Bei einer Reihe weiterer bekannter Verfahren werden Formteile mit einer kratzfesten Oberflächenschicht dadurch erzeugt, daß man die formbildende Oberfläche eines Spritzgußwerkzeugs mit einer kratzfesten Schicht versieht und in die so vorbereitete Form eine härtbare Masse zur Bildung des inneren Formkörpers einbringt und aushärtet. So wird bei dem ersten Verfahren der DE-C 24 55 715 auf die innere Formwand eine Schicht eines Überzugsmaterials aufgetragen und unter einer sauerstofffreien Atmosphäre photochemisch gehärtet. Anschließend wird ein Monomeres, das für die Bildung des Formkörpers vorgesehen ist, z.B. ein Methacrylatsirup, in die Form gegeben und unter vorherbestimmten Bedingungen polymerisiert. Dabei verbindet sich die auf die Formwand aufgebrachte Schicht mit dem entstehenden Polymerisatkörper und kann nach der Polymerisation mit diesem aus der Form entnommen werden.

Bei einem sehr ähnlichen Verfahren gemäß DE-C 21 64 716 wird die auf die Forminnenwand aufgetragene Beschichtung mit einer Folie abgedeckt und mittels radikalischer Initiatoren gehärtet, wodurch die Anwendung eines sauerstofffreien Schutzgases entbehrlich wird. Nach der Aushärtung der Beschichtung wird die Folie abgezogen und ein Monomeres für den Kunstharzkern eingefüllt und polymerisiert. In entsprechender Weise wird bei den Verfahren gemäß DE-A 31 40 316 und 30 28 562 gearbeitet, wo nach Beschichtung der Formwände mit gefärbtem Material ein ungesättigtes Polyesterharz in den Formhohlraum eingespritzt und ausgehärtet wird.

Nach DE-A 32 03 540 werden Spritzgußteile mit kratzfester Oberfläche erzeugt, indem man in das Spritzgußwerkzeug einem kratzfest beschichteten Folienabschnitt einlegt und dann eine thermoplastische Formmasse einspritzt, die sich mit dem Folienabschnitt unter dem Formmassendruck verbindet. Dieses Verfahren eignet sich nur zur kratzfesten Ausrüstung von Teilen mit ebenen Oberflächen.

Zur Herstellung von Spritzgußteilen mit einer oberflächlichen Farbschicht wird in DE-C 28 03 144 vorgeschlagen, auf die Innenseite eines Spritzgußwerkzeugs einen Lackfilm aufzutragen und zu härten. Danach wird das Werkzeug geschlossen und eine Formmasse eingespritzt.

Gemäß DE-A 24 48 477 wird die Innenseite eines heißen Formwerkzeugs elektostatisch mit einem thermoplastischen Pulverharz beschichtet, das dort zu einer Schicht zusammensintert. Anschließend wird eine treibmittelhaltige Formmasse eingespritzt. Man erhält einen Schaumstoff-Formkörper mit einer Oberflächenschicht aus dem thermoplastischen Material, das eine höhere Kratzfestigkeit als der Schaumstoffkörper hat.

## Aufgabe und Lösung

Der Erfindung liegt die Aufgabe zugrunde, bei einem Verfahren zur Herstellung kratzfest beschichteter Kunststofformkörper durch Beschichten der formbildenden Oberfläche eines Spritzgußwerkzeuges mit einem zur Bildung der kratzfesten Beschichtung geeigneten Material, Einspritzen einer thermoplastischen oder duroplastischen Formmasse in das geschlossene Werkzeug und Entformung des gebildeten Formkörpers nach Abkühlung unter die Erweichungstemperatur eine Oberfläche von hoher Kratzfestigkeit zu erzeugen.

Die Aufgabe wird erfindungsgemäß dadurch gelöst, daß zur Bildung der kratzfesten Beschichtung eine flüssige Mischung aus wenigstens einem radikalisch polymerisierbaren Monomeren mit mehr als einer polymerisierbaren Doppelbindung und wenigstens einem radikalbildenden Initiator auf die formbildende Oberfläche des Spritzgußwerkzeugs aufgebracht wird. Bei Verwendung thermoplastischer Formmassen wird das Werkzeug auf eine Temperatur vorgewärmt, die niedriger ist als die Temperatur der geschmolzenen thermoplastischen Formmasse. Die Mischung zur Bildung der kratzfesten Beschichtung enthält in diesem Fall einen radikalbildenden Initiator, der bei Temperaturen zwischen der Temperatur des Formwerkzeugs und der Temperatur der thermoplastischen Formmasse Radikale bildet. Wird eine duroplastische Formmasse verwendet, so wird das Werkzeug auf eine Temperatur vorgewärmt, bei der die duroplastische Formmasse härtet. In der flüssigen Mischung zur Bildung der kratzfesten Beschichtung wird ein radikalbildender Initiator verwendet, der bei der Temperatur des Formwerkezugs Radikale bildet. Die Polymerisation der Monomeren setzt entweder sofort oder nach Einspritzen der Formmasse ein und gelangt zum Abschluß, bevor das Spritzgußteil unter die Erweichungstemperatur abgekühlt ist und entformt wird. Die Polymerisation ist als abgeschlossen anzusehen, wenn eine harte kratzfeste Schicht erhalten wird, auch wenn sich in dieser noch unumgesetzte Doppelbindungen nachweisen lassen.

## Vorteile der Erfindung

Beim Verfahren der Erfindung werden Kunststofformkörper erhalten, die dem Formwerkzeug maßgenau entsprechen. Es können beliebig gestaltete Spritzgußteile mit kratzfester Oberfläche unter Verwendung üblicher, vorhandener Spritzgußmaschinen und -werkzeuge erzeugt werden. Zur Herstellung des Formkörpers können herkömmliche thermoplastische Spritzgußmassen ohne reaktive Gruppen oder übliche duroplastische Formmassen eingesetzt werden. Diese Vorteile werden durch leicht und schnell ausführbare Verfahrensmaßnahmen erreicht, die das Spritzgußverfahren nicht übermäßig verzögern und verteuern.

## Anwendung der Erfindung

Das Verfahren der Erfindung eigent sich zur Herstellung von kratzfesten Spritzgußteilen aller Art, deren Größe und Gestalt nur durch die Grenzen der Spritzgußtechnologie beschränkt sind. Naturgemäß hat die Erfindung für die Herstellung von Teilen mit hochglänzender Oberfläche, insbesondere aus glasklarem Kunststoff, die größte Bedeutung. Beispiele für solche Teile sind optische Linsen, Brillengläser, optische Prismen, Spiegel, Armaturenverglasungen, Fensterscheiben für Automobile, Wohnwagen, Schiffe, Flugzeuge u.dergl.

Geeignete spritzbare thermoplastische Kunststofformmassen sind z.B. Polyäthylen, Polypropylen, Polystyrol und Polyvinylchlorid. Bevorzugt sind Polycarbonate, wie Bisphenol-A-Polycarboanat, und insbesondere Acrylglas, worunter Homo-und Copolymerisate des Methylmethacrylats (mit einem MMA-Anteil >80%) verstanden werden. Die thermoplastischen Formmassen erhärten beim Abkühlen unter die Erweichungstemperatur zu festen Formkörpern.

Als duroplastische Formmassen eignen sich die bekannten reaktiven Harze, die reaktionsfähige Komponenten bzw. Gruppen enthalten und beim Erhitzen zu vernetzten, hochpolymeren Werkstoffen aushärten. Ihre Härtungstemperaturen liegen im allgemeinen zwischen 40 und 230, vorzugsweise zwischen 40 und 150 Grad C. Die duroplastischen Formmassen werden auch als Duromere bezeichnet und sind durch DIN 7724 definiert. Es kann sich um flüssige bis pastenförmige Gießharze oder um pulverförmige oder körnige Preßmassen handeln. Bekannte Vertreter duroplastischer Formmassen sind Phenoplaste, Aminoplaste, Epoxidharze, wärmehärtbare Acrylharze, Alkydharze, ungesättigte Polyesterharze und Isocyanatharze.

## Ausführung der Erfindung

Die Monomeren zur Bildung der kratzfesten Schicht haben wenigstens zwei und selten mehr als sechs polymerisierbaren Doppelbindungen. Diese können in Acryloyl-, Methacryloyl-, Vinyl-, Allyl-oder Methallylresten vorliegen. Bevorzugt sind Ester der Acryl-oder Methacrylsäure mit mehrwertigen alphatischen Alkoholen. Diese enthalten in der Regel 2 bis 10 Kohlenstoffatome und 2 bis 6 Hydroxylgruppen, die alle oder zum Teil verestert sein können.

Beispiele solcher Monomerer sind Äthylenglykol-diacrylat und -dimethacrylat, 1,2-Propylenglykol-diacrylat und -dimethacrylat, 1,2- bzw. 1,4-Butylenglykol-diacrylat und -dimethacrylat, Glycerin-triacrylat und -trimethacrylat, Pentaerythrit-tri-und -tetra-acrylat und -methacrylat, Trimethylolpropan-triacrylat und -trimethacrylat sowie die Acrylester von Dipentaerythrit. Da unter den erwähnten Estern die der Acrylsäure schneller und vollständiger polymersieren als die der Methacrylsäure, werden mit besonderem Vorteil allein die Acrylester oder allenfalls Gemische von Acryl- und Methacrylestern verwendet, worin die ersteren deutlich überwiegen und die letzten höchstens 30, bevorzugt nicht mehr als 15 Gew.-%, ausmachen. Monomere mit Siedepunkten über 140 Grad C sind bevorzugt.

Unter den mehrfunktionellen Monomeren führen diejenigen mit drei oder mehr Kohlenstoff-Doppelbindungen zu einer besonders hohen Vernetzungsdichte und entsprechend guter Kratzfestigkeit. Wegen ihrer meist hohen Viskosität sind sie jedoch in reiner Form bei Raumtemperatur schwer verarbeitbar. Die Viskosität kann durch einen Anteil an difunktionellen Monomeren vermindert werden. Dasselbe läßt sich durch den Zusatz monofunktioneller Monomerer erreichen, die zwar nicht zur Vernetzung beitragen, aber zu einer erhöhten Flexibilität der kratzfesten Schicht führen. Als monofunktionelle Monomere sind beispielsweise Styrol, Acrylnitril, Methacrylnitril, Monoalkylester der Acryl- und Methacrylsäure mit 1 bis 10 C-Atomen im Alkylrest oder mit substituierten Alkylresten, die beispielsweise Hydroxylgruppen als Substituenten tragen können, zu nennen.

Der Anteil der mono-und bifunktionellen Monomeren kann im Interesse einer günstigen Verarbeitungsviskosität und einer hohen Flexibilität der kratzfesten Beschichtung bis auf 70 Gew.-% der Monomermischung gesteigert werden, während der Anteil der drei-oder mehrfunktionellen Monomeren im Interesse einer hohen Kratzfestigkeit nicht unter 30 Gew.-% liegen sollte. Überraschenderweise kann das Monomerengemisch ohne Beeinträchtigung der Kratzfestigkeit bis zu 30 Gew.-% Acrylsäure oder Methacrylsäure enthalten. Die Viskosität des flüssigen Monomerengemisches liegt mit Vorteil nicht über 100 mPa s (gemessen bei 20 Grad C).

Neben oder anstelle der mono-oder difunktionellen Monomeren können zur Einstellung einer günstigen Verarbeitungsviskosität nicht polymerisierbare, flüssige, flüchtige organische Lösemittel verwendet werden. Sie müssen aus der auf die Werkzeugoberfläche aufgetragenen Schicht vor dem Schließen des Werkzeugs und dem Einspritzen der Formmasse weitgehend oder vollständig verdampfen. Der nicht verdampfte Rest verflüchtigt sich allmählich nach dem Entformen des fertigen Spritzgußteils.

Das Lösemittel muß, damit es verdampfen kann, einen Siedepunkt unter demjenigen der verwendeten Monomeren haben. Es ist vorteilhaft, wenn der Siedepunkt unterhalb der Temperatur des Werzeugoberfläche liegt. Geeignete organische Lösemittel sind z.B. aliphatische Ester, Äther, Ketone, Chlorkohlenwasserstoffe und aromatische Kohlenwasserstoffe. Unter den Ketonen, die allgemein bevorzugt werden, ist Methylethylketon besonders hervorzuheben.

Der radikalbildende Initiator hat die Aufgabe, die auf die formbildende Oberfläche des Spritzgußwerkzeugs aufgetragene Schicht der Monomerenmischung durch Polymerisation zu härten. Die Härtung kann vor dem Schließen des Werkzeugs und Einspritzen der Formmasse abgeschlossen sein. In diesem Falle kann die gehärtete Schicht von .der in das Werkzeug einströmenden Formmasse nicht verdrängt werden. Andererseits ist die Haftung zwischen der Schicht und der abgekühlten Formmasse nicht immer voll zufriedenstellend. Eine bessere Haftung wird erzielt, wenn die Polymerisation der Schicht erst nach dem Einspritzen der Formmassse abgeschlossen wird. Wenn die Polymerisation beim Einspritzen der Formmasse noch nicht weit genug fortgeschritten ist, besteht die Gefahr, daß die Schicht teilweise von der Werkzeugoberfläche verdrängt wird. Der Arbeitsrhytmus des Spritzgießverfahrens wird daher zweckmäßig so festgelegt, daß die Zeitspanne zwischen dem Aufbringen der Monomermischung auf die Werkzeugoberfläche und dem Einspritzen der thermoplastischen oder duroplastischen Formmasse zu einer teilweisen Polymerisation ausreicht, bei der die Verdrängung der Schicht vermieden, aber eine ausreichende Haftung erreicht wird.

Bei Zutritt von Luftsauerstoff zu der polymerisierenden Schicht auf der Werkzeugoberfläche wird die Polymerisation an der freiliegenden Oberfläche der Schicht stärker als an der Berührungsfläche mit der Werkzeugoberfläche gehemmt. Dadurch wird die Schicht an der Werkzeugoberfläche mehr oder weniger vollständig ausgehärtet, während die andere Seite solange im teilpolymerisierten Zustand verbleibt, bis durch die eingespritzte Formmasse der Luftzutritt verwehrt und die Polymerisation unter Ausbildung einer guten Haftung abgeschlossen wird. Falls trotz dieser erwünschten Inhibierungswirkung des Luftsauerstoffs eine vollständige Aushärtung der Schicht vor dem Einspritzen der Formmasse erwünscht ist, so ist es ratsam, das Werkzeug zu - schließen und ein Inertgas einzublasen.

Für das Verfahren der Erfindung sind radikalbildende Initiatoren mit einer Halbwertzeit < 2 min bei 100 Grad C besonders geeignet; vgl. Ullmanns Enzyklopädie der technischen Chemie, 3. Aufl., 1970, Ergänzungsband, S. 177-181. Besonders geeignet sind aliphatische Peroxydicarbonate; dazu gehören:

Diäthyl-peroxydicarbonat
Di-chloräthyl-peroxydicarbonat
Diisopropyl-peroxydicarbonat
Diisobutyl-peroxydicarbonat
Di-2-äthylhexyl-peroxydicarbonat
Dicyclohexyl-peroxydicarbonat
Di-(alkyl-cyclohexyl)-peroxydicarbonat
Di-(methyl-cyclohexyl)-peroxydicarbonat
Di-tert.butylcyclohexyl-peroxydicarbonat

Siehe dazu Swern, Organic Peroxides, John Wiley & Sons, Vol. 1, 1970, S. 68-73 und Vol. 2, 1971, S. 863-867.

Die Initiatoren, wie die oben genannten Peroxydicarbonate, werden in Mengen von 0,1 bis 10 Gew.-%, insbesondere von 1 bis 7 Gew.-%, bezogen auf das Gesamtgewicht der Monomermischung, eingesetzt. Neben Initiatoren mit einer Halbwertzeit < 2 min können solche mit > 2 min bei 100 Grad C in geringerer Menge, z.B. bis zu einem Fünftel der erstgenannten, mitverwendet werden. Als Beispiele seien Dilauroylperoxid, tert.-Butylperpivalat oder Dibenzoylperoxid genannt.

Der flüssigen Monomermischung können gewünschtenfalls weitere Zusätze beigemischt werden, beispielsweise Verlaufshilfsmittel, Antioxydantien, Antistatika oder UV-Schutzmittel. Verwendbar sind übliche, nicht polymerisierbare UV-Absorber, wie sie in Ullmanns Enzyklopädie der technischen Chemie, 4. Aufl., Band 15, Seiten 253-260, aufgeführt sind. Vorteilhafter sind jedoch polymerisierbare UV-Absorber, wie 3-(2-Benzotriazolyl)-2-hydroxy-5-tert.-octybenzylmethacrylamid.

Die aus Monomeren und Initiatoren sowie gegebenenfalls aus organischen Lösemitteln und weiteren Zusätzen bestehende Monomerenmischung wird in einer Schichtdicke zwischen 1 und 100 Mikrometer, vorzugsweise 2 bis 50 Mikrometer auf die formbildende Werkzeugoberfläche aufgetragen; darunter werden diejenigen Flächen des Formwerkzeugs verstanden, die beim Spritzgießen mit der Formmasse in Berührung treten und die räumliche Begrenzung des Formteils bestimmen. Die Kratzfestigkeit würde durch geringere Schichtdicken nicht gewährleistet und durch höhere Schichtdicken nicht weiter verbessert, sondern allenfalls die Elastizität und Haftfestigkeit der Schicht vermindert. Die Schicht wird am zweckmäßigsten aufgesprüht, wobei die nicht formbildenden Flächenstücke der Werkzeugoberfläche sowie die Teile der formbildenden Oberfläche, an denen keine kratzfeste Beschichtung erzeugt werden soll, durch geeignete Schablonen ausgespart werden können. Sofern die Beschichtung nicht gaslos aufgesprüht wird, werden zum Sprühen bevorzugt sauerstofffreie Gase, wie Stickstoff, verwendet, um die Polymerisation der gebildeten Schicht nicht zu beeinträchtigen.

Bei kompliziert gebauten, insbesondere vielteiligen Werkzeugen kann es zweckmäßig sein, die Schicht mittels eines oder mehrerer, mit dem Werkzeug integrierter Sprühköpfe in das geschlossene Werkzeug einzusprühen, um dadurch die Beschichtung allein auf den formbildenden Flächenstücken anzubringen. Danach kann das Werkzeug gegebenenfalls zur Entlüftung der Lösemitteldämpfe kurzzeitig geöffnet werden.

Die Werkzeugoberfläche hat in der Regel eine Temperatur zwischen 40 und 150 Grad C. Die aufgebrachte Schicht der Monomerenmischung nimmt diese Temperatur an, es sei denn, daß sie durch die Verdunstung des Lösemittels erniedrigt oder durch die zusätzliche Einwirkung eines Wärmestrahlers erhöht wird. Die Polymerisation verläuft in dem genannten Temperaturbereich - schnell und kann - insbesondere bei Ausschluß von Luftsauerstoff - innerhalb von 5 bis 600 Sekunden abgeschlossen sein. Die bevorzugte Zeitspanne zwischen dem Aufbringen der Schicht und dem Einspritzen der Formmasse beträgt 1 bis 29 sec.

Sobald die Schicht im gewünschten Maße gehärtet und das Spritzgußwerkzeug geschlossen ist, kann die Formmasse in üblicher Weise im schmelzflüssigen Zustand eingespritzt werden. Die endgültige Aushärtung erfolgt in der Zeit, in der das Formteil bis zur Abkühlung unter die Erweichungstemperatur in der geschlossenen Form verbleibt. Danach wird die Form geöffnet und das Teil ausgeworfen.

Die Güte der kratzfesten Schicht auf dem fertigen Formteil hängt von der Zusammensetzung der verwendeten Monomerenmischung ab, insbesondere von der Vernetzungsdichte, der Elastizität und der Haftung an der darunterliegenden Formmasse. Bei zweckmäßiger Wahl der Zusammensetzung wird eine gleichwertige oder höhere Kratzfestigkeit wie mit hochwertigen Kratzfestbeschichtungen auf Polysiloxanbasis erreicht. Die besten erfindungsgemäß herstellbaren Beschichtungen werden durch Stahlwolle 00 selbst beim starken Reiben nicht zerkratzt.

Beispiel 1

9,43 g eines Gemisches aus 56 Gew.-% Pentaerythrittetraacrylat (Siedepunkt bei Normaldruck 450 Grad C) und 44 Gew.-% Hexandiol-1,6-diacrylat (Siedepunkt bei Normaldruck 315 Grad C) wurden mit 1,6 g Initiatorlösung im Becherglas angerührt. Die Initiatorlösung bestand aus 10,5 g Methylethylketon als Lösungsmittel und 1,6 g Bis-4-tert-(butylcyclohexyl)-peroxidicarbonat als Initiator mit einer Halbwertzeit von 20 sec bei 100 Grad C. Die Lösung wurde in den Becher eines Mikrospritzapparats gefüllt und mittels Stickstoff als Trägergas bei 4 bis 5 bar Spritzdruck auf die Innenseite eines geöffneten Spritzgußwerkzeuges gesprüht. Die Beschichtung auf der heißen Werkzeugoberfläche ist bis zum Einspritzen der Formmasse der umgebenden Luft ausgesetzt. Während dieser Zeit bleibt die Oberfläche der Beschichtung verhältnismäßig weich, woran zu erkennen ist, daß sie nur teilweise polymerisiert ist. Die Werkzeugoberfläche hatte eine Temperatur von 90 Grad C.

Unmittelbar nach dem Aufsprühen der Beschichtung wurde das Spritzgußwerkzeug geschlossen. 4 sec später wurde eine thermoplastische PMMA-Formmasse (Handelsbezeichnung PLEXIGLAS Y 8 N, glasklar) mit einer Temperatur von 250 Grad C eingespritzt. Nach einer Zeitspanne von 50 sec seit dem Aufsprühen der Beschichtung wurde das Werkzeug geöffnet und das Formteil entnommen. Es handelt sich um eine Kreisscheibe mit einem Durchmesser von 135 mm und einer Dicke von 3 mm. Sie trägt auf der Oberfläche eine 5 μm dicke kratzfeste Schicht.

Die Kratzfestigkeit der Oberfläche wurde nach dem Reibrad-Verfahren gemäß DIN 52347E geprüft. Gemessen wird die Zunahme des Streulichtes, das von der Oberflächenverkratzung ausgeht. Die Zunahme des Streulichtes nach der Kratzbeanspruchung betrug 6,7 %. An einem Vergleichs-Formkörper ohne kratzfeste Schicht wurde beim gleichen Test eine Streulichtzunahme von 43,7 % ermittelt. Zur Prüfung der Haftfestigkeit der Kratzfestbeschichtung wurde ein Gitterschnitt-Test nach DIN 53151 durchgeführt. Dabei zeigten sich keinerlei Ablösungen.

## Beispiel 2

5,54 g einer Monomermischung, bestehend aus 21 Gew.-% Pentaerythrit-tetraacrylat (Siedepunkt bei Normaldruck 450 Grad C) und 79 Gew.-% Trimethylolpropantrisacrylat (Siedepunkt bei Normaldruck 315 Grad C), wurden mit 2 Gew.-% Initiatorlösung versetzt. Die Initiatorlösung bestand aus 6,6 g Cyclohexanon (Siedepunkt bei Normaldruck 156 Grad C) und 16 Gew.-% Bis-4-tert-butylcyclohexyl-peroxydicarbonat (Halbwertzeit 20 sec bei 100 Grad C). Die weitere Verarbeitung erfolgte wie in Beispiel 1. Die Kratzfestigkeit des erhaltenen Formteils wurde durch Reiben mit Stahlwolle geprüft. Die Oberfläche erwies sich als wesentlich Kratzbeständiger als die eines Vergleichs-Formkörpers ohne kratzfeste Beschichtung. Beim Gitterschnitt-Test zeigten sich keine Ablösungen.

## Beispiel 3

8 g einer Monomerenmischung, bestehend aus 56 Gew.-% Pentaerythrit-tetraacrylat und 44 Gew.-% Hexandiol-1,6-diacrylat wurden mit 16 Gew.-% Initiatorlösung versetzt. Die Initiatorlösung enthielt 9 Gew.-% des in den Beispielen 1 und 2 verwendeten Initiators in 23,4 g Cyclohexanon. Die Sprühlösung wurde wie im Beispiel 1 auf die Werkzeugoberfläche aufgetragen. Das Werkzeug hatte eine Temperatur von 100 Grad C. 4 sec nach dem Aufsprühen wurde eine Polycarbonat-Formmasse (Handelsbezeichnung MACROLON 2800) mit einer Schmelzetemperatur von 280 Grad C eingespritzt. Nach einer Zeit von 50 sec seit dem Auftragen der Beschichtung wurde das Spritzgußwerkzeug geöffnet und der Formkörper entnommen. Er hatte eine 3,5 μm dicke kratzfeste Schicht. Sie erwies sich bei der Prüfung mit Stahlwolle als wesentlich kratzfester als ein unbeschichteter Vergleichsformkörper aus Polycarbonat-Formmasse. Beim Gitterschnitt-Test zeigten sich keine Ablösungen.

## Beispiel 4

Eine Kratzfestbeschichtung der Zusammensetzung wie im Beispiel 1 wurde auf eine 85 Grad C heiße Formhälfte eines Spritzgußwerkzeugs aufgesprüht. Die andere Formhälfte hatte eine Temperatur von 60 Grad C und blieb unbeschichtet. Nach dem Aufsprühen wurde das Werkzeug geschlossen und Polystyrol-Formmasse (Handelsbeizeichnung PS 180 N, BASF) mit einer Temperatur von 210 Grad C eingespritzt. 90 sec nach dem Lackauftrag wurde entformt. Die kratzfest beschichtete Oberfläche des Formteils zeigte beim Reiben mit Stahlwolle eine wesentlich höhere Kratzfestigkeit als die unbeschichtete Oberfläche. Beim Gitterschnitt-Test ergaben sich keine Ablösungen der kratzfesten Schicht.

## Beispiel 5

Eine Formhälfte eines Spritzgußwerkzeuges wurde auf 120 Grad C temperiert und mit einer Kratzfestbeschichtung wie in Beispiel 1 besprüht. Daraufhin wurde das Werkzeug geschlossen und eine duroplastische Formmasse eingepreßt. Sie bestand aus 95 Gew.-% eines aliphatischen Diisocyanats, 4 Gew.-% eines Alkoxyesters und 1 Gew.-%

eines Katalysators. Bei einer Werkzeugtemperatur von 130 Grad C wurde die Masse innerhalb 60 sec zu einer 4 mm dicken Kreisscheibe von 123 mm Durchmesser ausgehärtet. Sie enthielt eine 6 μm dicke kratzfeste Schicht. Die Kratzfestigkeit wurde mit der Reibrad-Methode gemäß DIN · 52347E untersucht. Die Streulichtzunahme betrug an der kratzfest beschichteten Oberfläche 7,5 % und an der unbeschichteten Oberfläche 34,5 %. Beim Gitterschnitt-Test zeigten sich keine Ablösungen.

## Ansprüche

1. Verfahren zur Herstellung kratzfest beschichteter Kunststofformkörper durch Beschichten der formbildenden Oberfläche eines Spritzgußwerkzeuges mit einem zur Bildung der kratzfesten Beschichtung geeigneten Material, Einspritzen einer thermoplastischen oder duroplastischen Formmasse in das geschlossene Formwerkzeug und Entformung des gebildeten Formkörpers nach Abkühlung unter die Erweichungstemperatur

dadurch gekennzeichnet,

daß zur Bildung der kratzfesten Beschichtung eine flüssige Mischung aus wenigstens einem radikalisch polymerisierbaren Monomeren mit mehr als einer polymerisierbaren Doppelbindung und wenigstens einem radikalbildenden Initiator auf die Innenseite des Spritzgußwerkzeugs aufgebracht wird.

2. Verfahren nach Anspruch 1, dadurch gekennzeichnet, daß eine thermoplastische Formmasse eingespritzt wird und daß das Spritzgußwerkzeug auf eine Temperatur unterhalb der Temperatur der geschmolzenen thermoplastischen Formmasse vorgewärmt wird und daß in der flüssigen Mischung ein radikalbildender Initiator verwendet wird, der bei Temperaturen zwischen der Temperatur des Spritzgußwerkzeugs und der Temperatur der thermoplastischen Formmasse Radikale bildet.

3. Verfahren nach Anspruch 1, dadurch gekennzeichnet, daß eine duroplastische Formmasse eingespritzt wird, daß das Spritzgußwerkzeug auf eine Temperatur vorgewärmt wird, bei der die duroplastische Formmasse härtet und daß in der flüssigen Mischung ein radikalbildender Initiator verwendet wird, der bei der Temperatur des Spritzgußwerkzeugs Radikale bildet.

4. Verfahren nach Anspruch 1, dadurch gekennzeichnet, daß die thermoplastische oder duroplastische Formmasse in das geschlossene Spritzgußwerkzeug · eingespritzt wird, wenn die Monomeren in der auf die formbildende Oberfläche des Werkzeugs aufgetragenen Schicht teilweise polymerisiert sind.

5. Verfahren nach den Ansprüchen 1 bis 4, dadurch gekennzeichnet, daß die Mischung zur Bildung der kratzfesten Beschichtung auf die formbildende Oberfläche des Werkzeugs aufgetragen wird, wenn diese eine Temperatur zwischen 40 und 150 Grad C hat.

6. Verfahren nach den Ansprüchen 1 bis 5, dadurch gekennzeichnet, daß eine Mischung zur Bildung der kratzfesten Beschichtung aufgebracht wird, die ein flüchtiges organisches Lösemittel enthält.

7. Verfahren nach Anspruch 6, dadurch gekennzeichnet, daß ein Lösemittel verwendet wird, dessen Siedepunkt unterhalb des Siedepunktes des Monomeren bzw. des Monomerengemisches liegt.

8. Verfahren nach Anspruch 7, dadurch gekennzeichnet, daß ein von radikalisch polymerisierbaren Kohlenstoff-Doppelbindungen freies organisches Lösemittel eingesetzt wird.

9. Verfahren nach den Ansprüchen 6 bis 8, dadurch gekennzeichnet, daß die lösemittelhaltige Mischung auf die formbildende Oberfläche des geöffneten Spritzgußwerkzeugs gesprüht und das Werkzeug nach weitgehender Verflüchtigung des Lösemittels geschlossen wird und daß danach die thermoplastische oder duroplastische Formmasse eingespritzt wird.

10. Verfahren nach den Ansprüchen 1 bis 9, dadurch gekennzeichnet, daß als Monomer mit mehr als einer polymersierbaren Doppelbindung eine Verbindung mit mehr als einer Acryloylgruppe eingesetzt wird.

11. Verfahren nach Anspruch 10, dadurch gekennzeichnet, daß zur Bildung der kratzfesten Beschichtung eine Mischung eingesetzt wird, in der wenigstens 70 Mol-% der polymerisierbaren Doppelbindungen in Acryloylresten enthalten sind.

12. Verfahren nach den Ansprüchen 10 oder 11, dadurch gekennzeichnet, daß wenigstens ein Teil der eingesetzten Acrylverbindungen wenigstens drei Acryloylgruppen enthält.

13. Verfahren nach Ansprüchen 1 bis 12, dadurch gekennzeichnet, daß polymerisierbare Monomere mit einem Siedepunkt über 140 Grad C eingesetzt werden.

14. Verfahren nach den Ansprüchen 1 bis 13, dadurch gekennzeichnet, daß ein radikalbildender Initiator mit einer Halbwertzeit unter 2 min bei 100 Grad C eingesetzt wird.

15. Verfahren nach Anspruch 14, dadurch gekennzeichnet, daß als Initiator ein aliphatisches Peroxydicarbonat eingesetzt wird.

16. Verfahren nach den Ansprüchen 2 bis 15, dadurch gekennzeichnet, daß die thermoplastische Formmasse mit einer Temperatur zwischen 230 und 350 Grad C in das Spritzgußwerkzeug eingespritzt wird.

17. Verfahren nach den Ansprüchen 4 bis 16, dadurch gekennzeichnet, daß die auf das Spritzgußwerkzeug aufgebrachte Schicht aus radikalisch polymerisierbaren Monomeren während der teilweisen Polymerisation der Einwirkung von Luftsauerstoff ausgesetzt wird.

18. Verfahren nach den Ansprüchen 1 - 17, dadurch gekennzeichnet, daß die thermoplastische oder duroplastische Formmasse 1 bis 20 sec nach dem Aufbringen der polymerisierbaren Monomeren auf die Oberfläche in das Spritzgußwerkzeugs eingespritzt wird.